(19) **Europäisches Patentamt**

**European Patent Office**

**Office européen des brevets**

(11) **EP 1 139 235 B1**

(12) **EUROPEAN PATENT SPECIFICATION**

(45) Date of publication and mention
of the grant of the patent:
**24.05.2006 Bulletin 2006/21**

(51) Int Cl.:
*G06F 17/30* (2006.01)    *H04L 29/06* (2006.01)
*G06F 11/14* (2006.01)

(21) Application number: **01107910.0**

(22) Date of filing: **28.03.2001**

(54) **Distributed data processing system and method of processing data in distributed data processing system**

Verteiltes Datenverarbeitungssystem und Datenverarbeitungsverfahren in einem verteilten Datenverarbeitungssystem

Système informatique distribué et méthode informatique dans un système distribué

(84) Designated Contracting States:
**AT BE CH CY DE DK ES FI FR GB GR IE IT LI LU MC NL PT SE TR**

(30) Priority: **29.03.2000 JP 2000091826**
**30.03.2000 JP 2000093256**
**01.03.2001 JP 2001057120**

(43) Date of publication of application:
**04.10.2001 Bulletin 2001/40**

(73) Proprietor: **FUJI PHOTO FILM CO., LTD.**
**Minamiashigara-shi, Kanagawa-ken 250-0193 (JP)**

(72) Inventor: **Suto, Akio,**
**Fuji Photo Film Co., Ltd.**
**Minamiashigara-shi,Kanagawa-ken 250-0193 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**JP-A- 11 053 240       US-A- 5 452 448**
**US-A- 5 781 910**

**Description**

BACKGROUND OF THE INVENTION

Field of the Invention:

The present invention relates to a distributed data processing system comprising a plurality of servers and a plurality of clients connected to the servers for performing a distributed data processing process on an object to be controlled, and a method of processing data in such a distributed data processing system.

Description of the Related Art:

Advances in recent years in information processors and information processing technology have led to widespread computer processing practices in various fields. For example, there are well known online data processing systems for financial institutions. Such online data processing systems are of a fully duplex configuration for recovery from a system failure. Specifically, the duplex system is made up of an active system and a backup system, and in the event of a failure of the active system, the active system switches to the backup system to give continued services to customers.

In order to allow the active system to switch to the backup system at any time, each of the active system and the backup system has a database of data to be processed by the system and information required by the system for processing the data. When data of the database of the active system is updated as a result of its data processing operation, corresponding data of the database of the backup system is also updated, so that the databases of the active and backup systems will contain the same data at all times.

At the time the database of the backup system is to be equalized with the database of the active system, the backup system is merely kept in a standby mode and does not perform any data processing operation. The active system simply needs to send an instruction to write updated data in the database to the backup system. As a consequence, it is not necessary to perform a conflict control process for accessing the database.

The above online data processing systems have a large system scale and tend to impose substantial adverse effects on the society in the event of system failures. Therefore, it has been recognized in the art that the cost of hardware and software solutions required to realize the fully duplex system design is unavoidable.

Smaller-size systems such as in-house information processing systems usually do not incorporate the above fully duplex principles because available resources are limited and should effectively be utilized. Such systems are often constructed such that while in operation the backup system performs another process different from the task that the active system processes.

Recent computers are becoming smaller in size and better in capability, and incorporate high-speed processors and large-capacity main memories and hard disks at lower costs. In view of these advantages, many in-house information processing systems comprise a plurality of servers and a plurality of clients connected to the servers for performing distributed processing of data for the servers.

For such in-house information processing systems, there have been proposed various database backup functions to keep the same data in the databases of the servers, pass the processing from one server to another if the former server suffers a fault, and recover the database of a server, which has been broken or otherwise failed, using the database of another server that is operating normally.

For example, some proposed database backup functions keep the same data in the databases of the servers and recover files in the database of a server that suffers a fault, using the data in the database of another server (see JP(A) 7114435, and JP(A) 5265829). Accoring to a known database backup process, data to be backed up are collected in an archive file, so that they can be backed up in a shortened period of time (see JP (A) 11053240).

US-A-5 781 910 relates to a system and method that utilizes a state machine approached to create a replicated fault tolerant database system that is capable of coordinating the execution of concurrent transactions. The system includes a plurality of database servers that may be accessed and manipulated by a plurality of application clients. For each transaction requested by the application clients, there is a single application server designated by the system as a coordinator for that transaction. The remaining application servers are associated with a database facility containing a replication of the data items involved in the transaction and are referred to as cohorts. Depending on the nature of the transaction, the coordinator will utilize either an 1 Phase Coordinated Commit Protocol (IPCC) or a 2 Phase Coordinated Commit Protocol (2PCC). Under IPCC, the coordinator and the cohorts independently update the data items referenced by the transaction. When the coordinator has finished its update, it then decides whether the transaction can be committed or whether the transaction must be aborted. The commit/abort decision reached by the coordinator is then communicated to the cohorts. Upon receiving an acknowledgement that its message has been delivered to all surviving cohorts, the coordinator performs its own commit or abort. Under 2PCC, the coordinator and cohorts update the relevant data items as required by the requested transaction. When the coordinator completes its updates or a transaction specific time out expires, it then activates a new time out and issues a request to the cohorts, asking whether each cohort is ready to commit or must abort the transaction. The coordinator then waits for the replies from the surviving cohorts or for the new time out to occur. The selection of the appropriate protocol (IPCC or 2PCC) depends on whether the transaction may be a commutative or non-commutative transaction.

US-A-5 452 448 relates to a replicate file updating method and system appropriate for effective use of a replicate file in a distributed data processing system. A read/write replica of a file in a file server is updated through a communication line by a client. At the same time, a replica server detects the update data by using a virtual communication line between the client and a read-only replica of the file. The update data are used for refreshing the read-only replica. The refreshing process makes it unnecessary to send the update data from the file server to the replica server. Also, communication is made between the file server and replica server to confirm validity of the update information taken in by the replica server to maintain equality of the files of the file server and the replica server. A judge is made by confirming through communication with the file server that the number of times of update of the file to be updated or the validation data obtained by the replica server is equal to the number of times of update of the file to be updated or the validation data obtained by the file server. This can effectively refresh the read-only replica of the replica server in a distributed data processing system without resending the update data.

JP(A) 11053240 describes a technique related to a data backup device and method for a computer. The technique provides a data backup device and a method for use with a computer that enables efficient copying of a data file in a short period of time by making improvements in a data file to be copied. The data backup device is for use with the computer which stores data files stored in a first storage section into a second storage section in a duplicated manner. The data backup device uses distributed processing to cause an archive file creation section to create an archive file and to cause a backup processing section to copy the thus-created archive file, the processing operations can be performed speedily and accurately, thus increasing the processing rate of the data backup device.

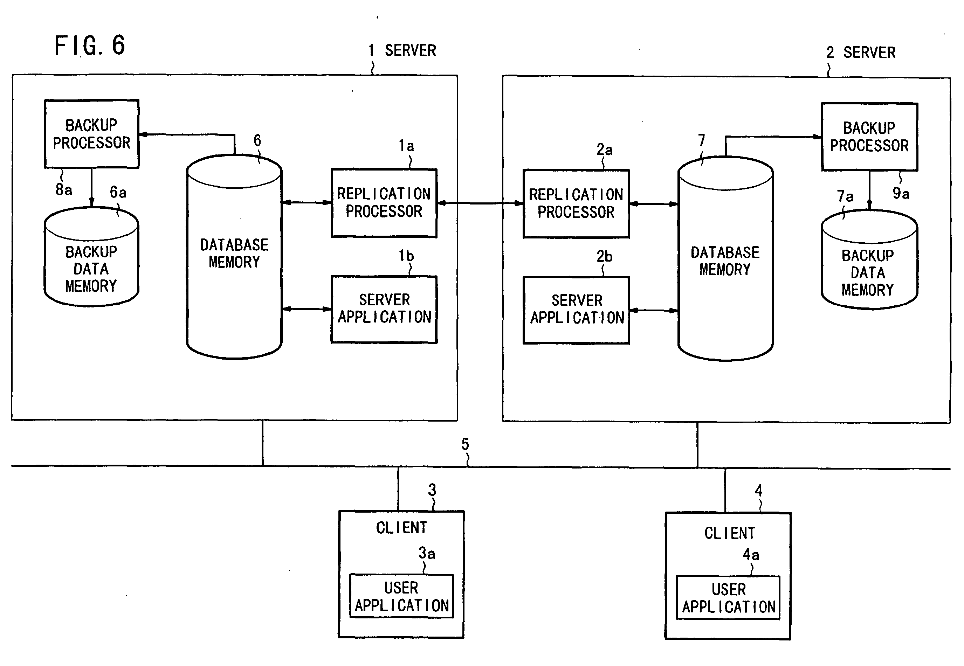

Fig. 6 of the accompanying drawings shows a process of recovering the database of a server, which has been broken or otherwise failed, using the database of another server that is operating normally.

A distributed data processing system shown in Fig. 6 has a plurality of servers 1, 2 and clients 3, 4 which are connected to each other by communication cables 5 such as of a LAN. The servers 1, 2 have respective database memories 6, 7 which stores respective databases. The servers 1, 2 are constructed to process processing requests from the clients 3, 4 in a distributed manner. The servers 1, 2 and the clients 3, 4 have respective server applications 1b, 2b and user applications 3a, 4a that have been accumulated depending on tasks to be processed by the distributed data processing system. The user applications 3a, 4a perform given processing sequences.

For updating data in the databases of the servers 1, 2 based on processing requests from the clients 3, 4, the servers 1, 2 communicate with each other with replication processors 1a, 2a and reflect updated data in their databases in the each other's databases, thus equalizing the data in their databases.

If the database of one of the servers 1, 2, e.g., the server 2, suffers a fault and the data stored in the database are broken for some reason, then the data in the faulty database are recovered using the data in the database of the server 1 which is normal.

Heretofore, it has been customary to recover the data in the faulty database using export and import functions of the databases, as follows:

The processing operation of the clients 3, 4 is stopped, and the data in the database memory 6 is stored into a backup data memory 6a using the export function of a backup processor 8a of the normal server 1. Then, the data in the backup data memory 6a is imported to the database memory 7 using the import function of a backup processor 9a of the server 2, thus allowing the database memory 7 to reflect the database data updated after the database has suffered the fault until the system shutdown. Thereafter, the distributed data processing system resumes its operation.

The export and import functions perform the following processing: According to the export function, the data in the database are divided into information about table definition, information about data, information about index definition, information about trigger definition, and information about matching limitation, and these items of information are stored in the backup data memories 6a, 7a. The above data processing is carried out in order to minimize the amount of data handled, so that the backup data memories 6a, 7a have a sufficient storage capacity available for storing the above information. According to the import function, the database is reconstructed from the divided data.

When the database is backed up using the above export and import functions, hardware resources for storing the data can be saved, but the process of recovering the database is time-consuming.

For example, a processing time according to the import function in a general database depends greatly on the index definition of the database. Specifically, the time required to reconstruct indexes depends on the amount of data, the number of indexes, and the number of fields (the number of columns) of tables used in the indexes, and is determined as follows:

```
Construction time = the amount of data × the number of

indexes × the number of fields used × the processing time

per field
```

Databases in production systems contain a large amount of data for an achievement table, etc., and user applications in such production systems need to retrieve data quickly from the table from many viewpoints. Therefore, a plurality of definitions are given for both the number of indexes and the number of fields used. Accordingly, a long import processing time is required. Systems which are required to process databases from various viewpoints, other than production systems, also require a long time for import processing.

While a database is being recovered, it is necessary to stop the processing of a server which operates normally, and hence to shut down the entire distributed data processing system. This is because if a normally operating server accepted a processing request from a client and updated its database while a faulty database is being recovered, then the data in the database of the normal server and the data in the database being recovered would not agree with each other.

In applications such as machine equipment control (hereinafter referred to as process control) and production management for production lines in factories that need to operate 24 hours a day, if a system downtime required to recover a database from a fault is unduly long, then it will greatly affect the production efficiency.

There is known a cluster system where a plurality of servers of a distributed data processing system monitor each other, and when a fault occurs in either one of the servers, all functions are shifted to a normal server in order to avoid the shutdown of the distributed data processing system.

However, the conventional cluster system is applied to function faults at higher levels such as hardware and OS levels, but not to function faults at lower levels such as database levels. The conventional cluster system needs a certain period of time to check the statuses of the servers and effect server switching upon a fault. Furthermore, the conventional cluster system is disadvantageous in that its cost increases due to the allocation of a plurality of communication addresses shared by the servers.

If the conventional cluster system is incorporated in a production system which is an OLTP (On-Line Transaction Processing) system that performs data processing such as updating, insertion, deletion in the databases, then the overall system is shut off during a server switching. Since the system automatically recovers from the shutdown when the server switching is completed, each of the clients needs some means for recognizing a fault. However, because the cluster system uses a plurality of shared communication addresses, all the communication addresses are taken over by a normally operating server upon the occurrence of a fault. Thus, it is difficult to construct a means for monitoring a server change in each of the clients.

It is a general object of the present invention to provide a distributed data processing system which comprises a plurality of servers and a plurality of clients connected to the servers, the distributed data processing system being capable of continuing a processing sequence without a system shutdown in the event of a fault of any of the servers, and a method of processing data in such a distributed data processing system.

This object is solved by the subject matters of the independent claims.

Preferred embodiments are defined by the dependent claims.

An aspect of the present invention is to provide a distributed data processing system which comprises a plurality of servers and a plurality of clients connected to the servers, the distributed data processing system being capable of, in the event of a fault of any of the servers, quickly switching a client connected to the faulty server to a fault-free server under the client management and continuing a processing sequence, and a method of processing data in such a distributed data processing system.

Another aspect of the present invention is to provide a distributed data processing system which comprises a plurality of servers and a plurality of clients connected to the servers, the distributed data processing system being capable of quickly recovering database without a system shutdown over a long period of time in the event of a fault of any of the servers, and a method of processing data in such a distributed data processing system.

The above features and advantages of the present invention will become more apparent from the following description when taken in conjunction with the accompanying drawings in which a preferred embodiment of the present invention is shown by way of illustrative example.

Fig. 1 is a block diagram of a distributed data processing system according to an embodiment of the present invention;
Fig. 2 is a block diagram of an arrangement where the distributed data processing system according to the embodiment of the present invention is incorporated in a production line;
Fig. 3 is a block diagram of a system configuration for controlling the connection of the clients in the distributed data processing system according to another embodiment of the present invention;

Fig. 4 is a flowchart of a processing sequence of a database updating processor in the distributed data processing system according to a further embodiment of the present invention;

Fig. 5 is a flowchart of a processing sequence of an updating information transfer unit in the distributed data processing system according to one embodiment of the present invention; and

Fig. 6 is a block diagram of a conventional distributed data processing system.

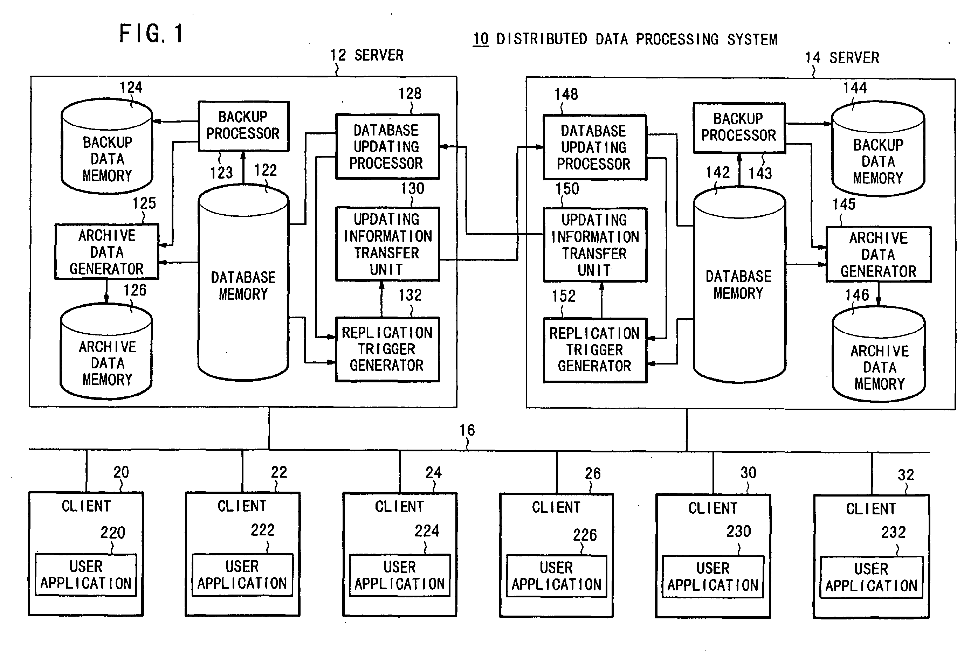

Fig. 1 shows in a block form a distributed data processing system 10 according to an embodiment of the present invention. The distributed data processing system 10 comprises a plurality of servers 12, 14 and a plurality of clients 20, 22, 24, 26, 30, 32 which are connected to each other by communication cables 16 such as of a LAN.

When the distributed data processing system 10 is operating normally, the server 12 and the clients 20, 22, 24, 26, for example, carry out the processing of a process control system of a production line, e.g., the processing of a control process for controlling a production machine for manufacturing photographic films, and the server 14 and the clients 30, 32 carry out the processing of a production management system for managing production plans, raw materials, and inventories.

The server 12, which is a server for carrying out the processing of a process control system, basically comprises a database memory 122 for storing data such as production instruction information, manufacturing history information, etc., to be described later on, sent and received between the clients 20, 22, 24, 26, a backup processor 123 for backing up the data in the database memory 122 on-line at certain time intervals and storing the backed-up data in a backup database memory 124, an archive data generator 125 for generating archive data based on updating information of the database stored in the database memory 122 and updated by the clients 20, 22, 24, 26 and storing the archive data in an archive data memory 126, a replication trigger generator 132 for generating a data replication trigger based on a database updating process carried out by the clients 20, 22, 24, 26, an updating information transfer unit 130 for transferring the updating information of the database to the other server 14 based on the data replication trigger, and a database updating processor 128 for updating the data in the database memory 122 based on a request for updating the database.

The archive data generator 125 serves to generate archive data according to new updating information after the database in the database memory 122 is backed up in the backup data memory 124. The archive data stored in the archive data memory 126 before the database in the database memory 122 starts to be backed up is discarded. The database in the database memory 122 may be backed up in the backup data memory 124 at any desired time intervals set by the operator. For example, the database in the database memory 122 may be backed up in the backup data memory 124 periodically at intervals of a day, i.e., 24 hours. All the archive data after a backup process starts until a next backup process starts is stored in the archive data memory 126. The updating information transfer unit 130 transfers the updating information at certain time intervals set by the system administrator.

The server 14, which is a server for carrying out the processing of a production management system, has a database memory 142 for storing data of production plans, raw materials, and inventories generated between the clients 30, 32. The server 14 also has a backup processor 143, a backup data memory 144, an archive data generator 145, an archive data memory 146, a database updating processor 148, an updating information transfer unit 150, and a replication trigger generator 152, which are identical to those of the server 12.

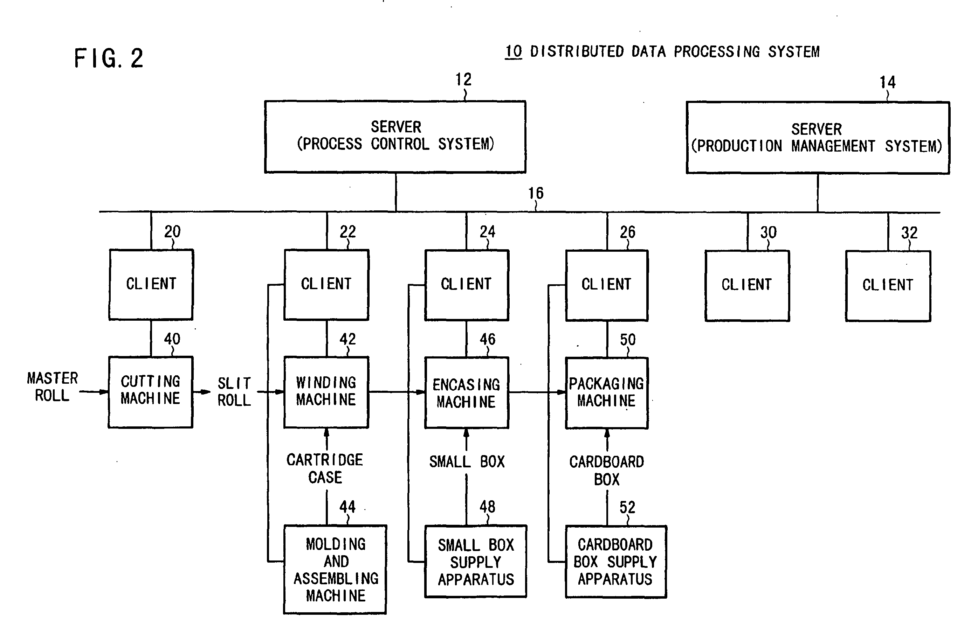

As shown in FIG. 2, the clients 20, 22, 24, 26 have respective user applications 220, 222, 224, 226 which, based on production instruction information from the server 12, control a cutting machine 40, a winding machine 42, an encasing machine 46, and a packaging machine 50, respectively, and transmits manufacturing history information collected from these machines to the server 12. Similarly, the clients 30, 32 have respective user applications 230, 232 for performing tasks including production plans, raw material purchase management processes, and product inventory management processes between themselves and the server 14.

The cutting machine 40 that is controlled by the client 20 cuts off a master roll of a photographic film material to a certain width to produce a slit roll. The winding machine 42 controlled by the client 22 winds the slit roll supplied from the cutting machine 40 into a cartridge case that is molded and assembled by a molding and assembling machine 44. The encasing machine 46 controlled by the client 24 encases a film cartridge with a small box supplied from a small box supply apparatus 48. The packaging machine 50 controlled by the client 26 packages the film cartridge encased in the small box with a cardboard box supplied from a cardboard box supply apparatus 52.

Each of the servers 12, 14 and the clients 20, 22, 24, 26, 30, 32 has a hardware arrangement comprising a processor, a main memory, a hard disk, a network interface, etc. as with a general personal computer. The machines and the user applications described above are operated under the control of operating systems that are installed in the servers 12, 14 and the clients 20, 22, 24, 26, 30, 32.

A normal mode of operation of the distributed data processing system 10 will be described below with reference to FIG. 2.

First, the client 20 receives individual production instruction information from the server 12 and displays the received individual production instruction information on a display monitor screen. The other clients 22, 24, 26 operate in the same manner as the client 20.

The individual production instruction information is generated by the clients 30, 32 connected to the server 14, and transmitted from the server 14 to the server 12. Information collected from the clients 20, 22, 24, 26 by the server 12 is transmitted from the server 12 to the server 14.

The individual production instruction information that is transmitted from the server 12 to the client 20 includes the production lot number of a master roll of a photographic film material that matches the type of products indicated by production plan data. A master roller having the same production log number is supplied from among master rolls stored in a storage chamber to the cutting machine 40 by a self-powered carriage or the like.

The client 20 sends operating conditions such as slitting conditions, e.g., the speed at which the master roll is to be fed and the inspecting conditions for a surface inspection device in the cutting machine 40, to the cutting machine 40. Based on the operating conditions supplied from the client 20, the cutting machine 40 cuts off the master roll to a certain width, thereby producing a slit roll.

At this time, a plurality of slit rolls are produced from the single master roll. In order to identify the slit rollers at a subsequent process, a label bearing a printed bar code indicative of an emulsion number, a master roll production lot number, and a slit roll number is produced each time a slit roll is completed, and produced labels are applied to the respective slit rolls. The bar codes are read by a bar-code reader, which enter bar code data into the client 20.

The slit roll is supplied to the winding machine 42 controlled by the client 22, and placed in a cartridge case.

The individual production instruction information that is transmitted from the database memory 122 of the server 12 includes the emulsion number, the master roll production lot number, and the slit roll number of the slit roll that is used.

The winding machine 42 removes the slit roll that is indicated by the individual production instruction information from a storage chamber, and sets the slit roll in place. The winding machine 42 reads the bar code applied to the slit roll set in place and confirms whether the bar code corresponds to the indicated slit roll. The winding machine 42 also sends information of how much the preceding slit roll has been consumed to the server 12 via the client 22. The client 22 then operates the winding machine 42 according to the conditions indicated by the individual production instruction information from the server 12.

The winding machine 42 has a perforator and a side printer. The perforator forms perforations in the slit roll according to an indicated format. The side printer records a latent image of production information on the slit roll. The production information includes a film ID number, frame numbers, an abbreviated product name, a manufacturer's name, etc. recorded in the form of a bar code. The film ID number is saved together with the order number of production plan data in the server 14, and also transmitted to the server 12 and written in the production instruction information that is transmitted to the client 22 which controls the winding machine 42.

When the side printer prints the film ID number, the film ID number is fed back together with the other side print information to the client 22, which confirms whether the supplied film ID number is the same as the film ID number indicated by the individual production instruction information or not. The client 22 transmits the other information obtained so far, i.e., the emulsion number, the master roll production lot number, and the slit roll number is, in association with the film ID number, to the server 12. The transmitted information is saved in the server 12 and also transmitted to the server 14.

The cutting machine 42 also has a cutter and a winder. After the side printer has printed the necessary information, the cutter cuts off an elongate photographic film unwound from the slit roll into a length corresponding to the number of exposure frames, thus producing a photographic film strip. The cutter operates under manufacturing conditions included in the individual production instruction information sent via the server 12 to the client 22.

The photographic film strip is then fed to the winder which is also supplied with a tray of cartridge cases that have been molded and assembled by the molding and assembling machine 44 from a stacking station. The tray has a tray ID number, which is read and supplied via the client 22 to the server 12.

The server 12 stores cartridge ID numbers and manufacturing history information of the cartridge cases on the tray, in association with the tray ID number. Therefore, the server 12 can confirm, based on the stored information, the range of cartridge ID numbers to which the cartridge cases supplied to the winding machine 42 belong, the order number based on which the cartridge cases have been manufactured, and the production lot numbers of parts which the cartridge cases are assembled of.

When the cartridge cases are successively supplied to the winder, the cartridge ID numbers are read from bar codes on labels applied the cartridge cases, and immediately entered into the client 22.

The cartridge case in the bar-code reading position is a cartridge case to be combined with the photographic film strip that is to be printed next by the side printer. Therefore, the client 22 confirms the cartridge ID number immediately before the side printer prints information on the photographic film strip.

The cartridge ID number thus read is transmitted to the server 12, which compares the cartridge ID number with a film ID number to be allotted to the photographic film strip by the side printer. Since the server 12 holds film ID numbers and cartridge ID numbers assigned to products to be manufactured when the production plan data is generated, the server 12 is capable of determining whether the cartridge ID number of the cartridge case supplied to the winder is appropriate or not.

When the winder operates, the trailing end of the photographic film strip engages a spool in the cartridge case, and then the spool is rotated to wind the photographic film strip into the cartridge case. Thereafter, a light shielding lid of the cartridge case is closed, completing a photographic film cartridge as a product.

Since the manufacturing history information of the photographic film strip, including the emulsion number, the master roll production lot number, and the slit roll number is already known, the manufacturing history information of the cartridge case and the photographic film strip is saved, as production management information in association with the cartridge ID number or the film ID number, via the server 12 into the server 14.

A certain number of photographic film cartridges thus produced are placed on a tray, and stored in a stacking station. At this time, the tray ID number of the tray is read and transmitted to the client 22, which associates the tray ID number with the ID numbers of the photographic film cartridges on the tray, i.e., the cartridge ID numbers or the film ID numbers, information as to usage and lack of the ID numbers of the photographic film cartridges, and manufacturing history information, and feeds back the associated information to the server 12. The server 12 transmits the associated information to the server 14.

Therefore, the information that represents the ID numbers of the photographic film cartridges stored in the stacking station, the types of the products, and the manufacturing histories of the photographic film strips and the cartridge cases, can be recognized in association with the tray ID number.

The client 24 controls the encasing machine 46 and the small box supply apparatus 48. A photographic film cartridge is supplied from the winding machine 42 to the encasing machine 46 in which the photographic film cartridge is placed in a film case and then stored in a small box.

The production instruction information from the server 12 indicates the production lot number to which the film case that is used belongs. The production log number of the film case that is used is sent via the client 24 to the server 12.

The small box bears an indication and a bar code which indicate the type of the product. The bar cord indicating the type of the product is printed when the small box is produced. However, a bar code indicating a packing material ID number of the small box is printed when the small box is supplied from the small box supply apparatus 48 to the encasing machine 46.

The packing material ID number to be printed is determined by the server 14 at the time the production plan is generated. As with the side printing of the film ID number, the packing material ID number is printed after it is confirmed that the cartridge ID number of the photographic film cartridge to be packed and the packing material ID number transmitted as the production instruction information agree with each other.

The photographic film cartridge packed in the small box is then delivered to the packaging machine 50 that is controlled by the client 26. The packaging machine 50 is supplied with a packaging cardboard box from the cardboard box supply apparatus 52, and packages 1000 photographic film cartridges, for example, in the cardboard box.

The packaging machine 50 has a packaging unit which prints a package ID number as a bar code on the cardboard box at the time the photographic film cartridges or products are packaged in the cardboard box. The package ID number is determined by the server 14, as with the packing material ID number. One package ID number is assigned to 1000 products to be packaged in the cardboard box with respect to the range of used packing material ID numbers printed by the encasing machine 46. The association between the package ID number and the 1000 products is saved in the server 14. Therefore, when the package ID number is read from the cardboard box, it is possible to recognize the range of used packing material ID numbers of the products packaged in the cardboard box.

The clients 30, 32 perform tasks including production plans, raw material purchase management processes, and product inventory management processes between themselves and the server 14. The clients 30, 32 are operated by the operator in a production management department to transmit the production instruction information to the server 12 and generate production management data from the manufacturing history data of the products that have been collected and transmitted by the server 12.

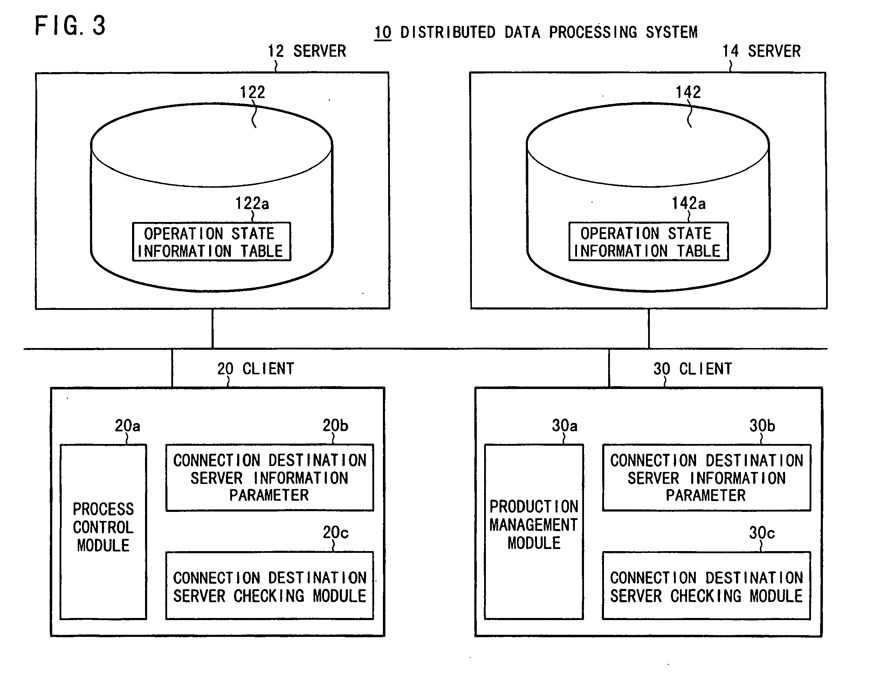

A distributed data processing process based on a system configuration of the clients 20, 30 shown in FIG. 3 will be described below. Since the clients 22, 24, 26, 32 have the same system configuration, a distributed data processing process based thereon will not be described below.

The client 20 has a process control module 20a for controlling the cutting machine 40, a connection destination server information parameter 20b (connection information manager), and a connection destination server checking module 20c (connection information changer). Similarly, the client 30 also has a process control module 30a for controlling the production management, a connection destination server information parameter 30b (connection information manager), and a connection destination server checking module 30c (connection information changer). The servers 12, 14 have respective operation state information tables 122a, 142a.

When the distributed data processing system 10 is in normal operation, the client 20 is connected to the server 12 and controls the process of the production line, and the client 30 is connected to the server 14 and performs the task of the production management. The connection destination server information parameter 20b of the client 20 represents the server 12 as a default setting, with the server 14 indicated as a backup server. Conversely, the connection destination server information parameter 30b of the client 30 represents the server 14 as a default setting, with the server 12 indicated as a backup server.

When the distributed data processing system 10 is activated, the connection destination server checking module 20c of the client 20 checks the server represented by the connection destination server information parameter 20b, i.e., the server 12 initially indicated as a default setting. Specifically, the connection destination server checking module 20c confirms the operation state information table 122a of the server 12 indicated as a default setting, and establishes a connection if the server 12 is in normal operation. The client 30 operates in the same manner.

If the server 12 is not in normal operation, then the connection destination server checking module 20c confirms the operation state information table 142a of the server indicated as a backup server, i.e., the server 14, and establishes a connection if the server 14 is in normal operation. If both the servers 12, 14 are not in normal operation, then a connection error is displayed, and the distributed data processing system 10 is shut off.

When a connection is established, the connection destination server checking module 20c indicates connection port information to the process control module 20a. Subsequently, the connection destination server checking module 20c periodically polls the operation state information table 122a, and if the connection destination server stops its operation, then the application of the client 20, i.e., the process control module 20a, is automatically stopped. The client 30 also operates in the same manner.

If one of the servers suffers a failure and stops its operation while the distributed data processing system 10 is normally operating, the client 20 or 30 which has been connected to the shut-off server is automatically stopped. For example, if the server 12 is shut off due to a fault, then the operator operates the client 20 that has been shut off to activate connection destination management software (not shown) to change a connection destination from the server 12, which has been established as a default setting by the connection destination server information parameter 20b, to the server 14, which has been established as a backup server.

The connection destination management software of the client 20 is configured to appoint the server 12 as a server to be connected in a normal situation and the server 14 as a server to be connected upon fault. The connection destination server checking module 20c refers to the operation state information table 142a of the server 14, and establishes a connection to the server 14.

At this time, the database memory 122 of the server 12 and the database memory 142 of the server 14 stores the same data, as described later on, and hence the process control processing can continuously been performed even though the client 20 is connected to the server 14. This holds true when the server 14 stops its operation due to a failure. Consequently, the film manufacturing process is continued without fail even if either one of the servers 12, 14 suffers a fault.

A backup process in the normal operation of the distributed data processing system 10 will be described below with reference to FIGS. 1, 4, and 5.

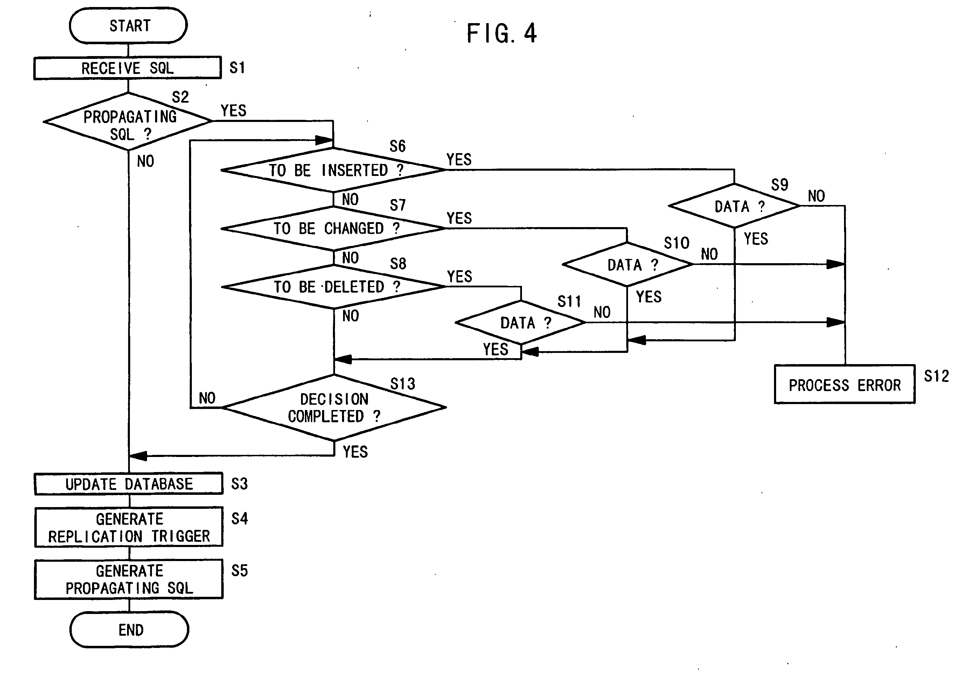

In the flowchart of FIG. 4, if an updating request for inserting data into, changing data in, or deleting data from, the database stored in the database memory 122 occurs as a result of the control process effected by the clients 20, 22, 24, 26 on the cutting machine 40 or other controlled machines, or as a result of an action made by the operator, then the database updating processor 128 of the server 12 receives an SQL (Structured Query Language) indicative of updating information generated upon the updating request in step S1. Then, the database updating processor 128 determines whether the received SQL is an updating SQL for updating the database of the its own database memory 122 or a propagating SQL for updating the database of the its own database memory 124 of the other server 14 in step S2.

If the received SQL is an updating SQL, then the database updating processor 128 inserts data into, changes data in, or deletes data from, the database stored in the database memory 122 according to the instruction of the SQL in step S3, and instructs the replication trigger generator 132 to generate a replication trigger. The instructed replication trigger generator 132 generates a replication trigger to replicate the database in step S4. Based on the replication trigger, the replication trigger generator 132 converts the updating SQL into a propagating SQL, and supplies the propagating SQL to the updating information transfer unit 130 in step S5.

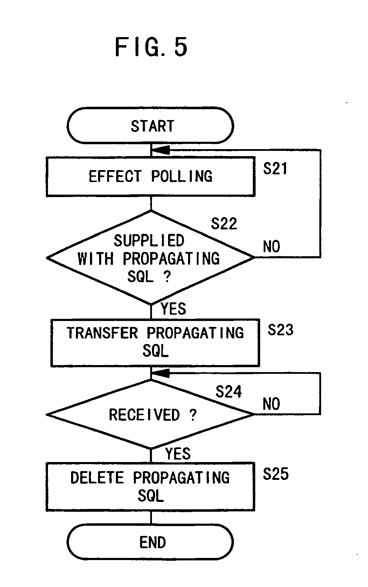

In the flowchart of FIG. 5, the updating information transfer unit 130 performs a polling process at certain time intervals in step S21. If the updating information transfer unit 130 is supplied with the propagating SQL from the replication trigger generator 132 in step S22, then the updating information transfer unit 130 transfers the propagating SQL to the database updating processor 148 of the server 14 in step S23. If the updating information transfer unit 130 receives an acknowledgement signal acknowledging the propagating SQL from the database updating processor 148 in step S24, then the updating information transfer unit 130 deletes its own propagating SQL in step S25.

In FIG. 4, the database updating processor 148 determines whether the SQL received in step S1 is an updating SQL generated by clients 30, 32 or a propagating SQL transferred from the other server 12 in step S2.

If the received SQL is a propagating SQL, then the database updating processor 148 determines whether the updating information of the propagating SQL represents a data insertion or not in step S6, whether the updating information of the propagating SQL represents a data change or not in step S7, and whether the updating information of the propagating SQL represents a data deletion or not in step S8. The database updating processor 148 also determines whether the changing information has data or not in steps S9, S10, S11. If the changing information has no data, then the transferring process is judged as suffering a fault, and an error is processed in step S12.

After the above processing is performed on all propagating SQLs in step S13, the database in the database memory 142 is updated in step S3. In this case, the database updating processor 148 issues a replication trigger generation inhibiting instruction to the replication trigger generator 152. The replication trigger generation inhibiting instruction inhibits updating information based on the propagating SQL from being transferred from the updating information transfer unit 150 to the server 12.

In this manner, the databases stored in the respective database memories 122, 142 of the servers 12, 14 are maintained as an identical database, though asynchronously.

In a distributed data processing system which performs asynchronously processing, a conflict of data may be anticipated. In the distributed data processing system 10 according to the present embodiment, however, such conflict of data can be prevented since a function of the production management system and a function of the process control system are clearly distinguished in normal operation based on each database to be connected. That is, each SQL for inserting, updating, or deleting data generated by a client connected to the database is not processed against the same record that a propagating SQL for inserting, updating, or deleting data is processed against.

The backup processors 123, 143 of the servers 12, 14 copy the databases stored in the respective database memories 122, 142 to the backup data memories 124, 144 at certain intervals, e.g., intervals of a day, i.e., 24 hours, while in operation, generating backup data for the database memories 122, 142. Different processes are available for backing up the backup data for the database memories 122, 142. Such backup processes include, for example, a full backup process for backing up all the data in the database memories 122, 142 once, a differential backup process for backing up only files with data updated or only data generated after the preceding full backup cycle, and an incremental backup process for backing up only files with data updated or only data generated after the preceding full backup cycle or the preceding differential backup cycle. The backup data for the database memories 122, 142 are generated according to either one of these available different backup processes.

At time the backup data start being generated, the archive data generators 125, 145 discard the data in the archive data memories 126, 146 which have accumulated the updating information of the databases so far. Thereafter, the archive data generators 125, 145 start recording newly updated data in the database memories 122, 142 as archive data in the archive data memories 126, 146.

The backing up of the databases in the backup data memories 124, 144 is carried out using a file copy function of the servers 12, 14 at the OS level. Unlike the export function which converts structural information and data of the database memories 122, 142 into respective different forms and outputs them as files, the file copy function copies the databases as they are, and takes a short time to back up the databases though it needs a large hard disk resource.

For example, whereas the export function requires about 600 minutes to back up a database having 3 gigabytes of data, the file copy function needs only 60 minutes, one-tenth of the 600 minutes, to back up the same database. For generating backup data according to the file copy function, however, it is necessary to use identical settings and file names for the files of the database memories 122, 142 and the data of the backup data memories 124, 144.

With the above arrangement, backup data are generated while the servers 12, 14 are operating, and new updating information for the database memories 122, 142 after the backup data have started to be generated is recorded in the archive data memories 126, 146. Thus, the database memories 122, 142 can be backed up efficiently in a short period of time. If a fault such as a database data breakdown, as described below, occurs, then the database data can quickly be recovered using the backup data and the archive data.

A process of recovering the data in the event of a fault such that that the data of the database memory 142 of the server 14 is destructed will be described below.

The clients 30, 32 connected to the server 14 have its connection destination changed to the server 12, and the distributed data processing system 10 is operated with the server 12 alone. The production process can thus be continued without a system shutdown. Then, the hardware arrangement of the faulty server 14 is restored. For example, the hard disk of the database memory 142, for example, is replaced with a new one.

Thereafter, the data in the backup data memory 124 is restored on the database memory 142 by way of file copying. Through this operation, a replication of the database in the database memory 122 at the time the database memory 122 is backed up is constructed in the database memory 142. During this processing, archive data after the start of the backup process in the operation is recorded in the archive data memory 126.

The operation to restore the data in the backup data memory 124 on the database memory 142 is carried out using the file copy function. Therefore, the databases including settings in the database memories 122, 142 are made fully identical to each other and stored in hard disk drives of the same name. In order to take over the processing of the client connected to one of the servers which suffers a fault, it is necessary to use a different global name for access from an external source.

After the copying process for the backup data is completed, all the clients 20, 22, 24, 26, 30, 32 connected to the server 12 is temporarily shut off in order to prevent the database memory 122 from being updated. Then, the archive data accumulated in the archive data memory 126 are applied to, i.e., written in, the database memory 142. This writing process is automatically performed according to a so-called roll-forward function. This roll-forward function is the same as the roll-forward function incorporated in general database processing software. This operation restores the data in the database memories 122, 142 to the same data.

After the completion of the above restoring process, the clients 30, 32 are connected again to the server 14, and the servers 12, 14 are activated again to resume operation of the entire distributed data processing system 10.

The distributed data processing system 10 is fully out of operation only while the archive data except the backup data is being applied to the database. If the time interval to back up the archive data during operation is set to one day, then the amount of the archive data is equal to at most the amount of database data updated in one day. The time required to restore the database from the achieve data ranges from several minutes to several tens of minutes. Therefore, the period of time in which the distributed data processing system 10 is shut off may also be reduced to the time ranging from several minutes to several tens of minutes. The system downtime is thus made much shorter than the time, i.e., about 8 hours, required to recover the database according to the conventional export and import functions.

Although a certain preferred embodiment of the present invention has been shown and described in detail, it should be understood that various changes and modifications may be made therein without departing from the scope of the appended claims.

## Claims

1. A distributed data processing system comprising a plurality of servers (12, 14) and a plurality of clients (20, 22, 24, 26, 30, 32) connected to the servers for performing a distributed data processing process on an object to be controlled, each of said servers comprising:

   a database memory (122, 142) for storing a database which is updated by the distributed data processing process performed by said clients;
   a replication trigger generator (132, 152) for generating a replication trigger based on the updating of said database by the distributed data processing process performed by said clients;
   an updating information transfer unit (130, 150) for transferring updating information of said database to another one of the servers based on said replication trigger;
   a database updating processor (128, 148) for updating said database based on the updating information transferred from the other server,

   wherein each of the servers (12, 14) is adapted for being updated based on a clients process while updating the database (122, 142) of the respective other server is performed.

2. The distributed data processing system according to claim 1, wherein each of said clients comprises:

   a connection information manager (20b, 30b) for managing connection information of a connection destination server to which the clients are connected; and
   a connection information changer (20c, 30c) for changing the connection information of the connection destination server;
   the arrangement being such that if any of said servers suffers a fault, said connection information is changed by said connection information changer, and the distributed data processing process performed by the clients connected to the server which suffers the fault is continued under the management of another one of the servers to which said connection information is changed.

3. The distributed data processing system according to claim 1 or 2, further comprising:

   a backup processor (123, 143) for performing backup process at predetermined time intervals while said database is in operation;
   a backup data memory (124, 144) for storing backup data produced by the backup process performed while said database is in operation;
   an archive data generator (125, 145) for generating archive data based on the updating information of the database which is generated after the backup process performed while said database is in operation has started; and
   an archive data memory (126, 146) for storing the archive data;
   the arrangement being such that said database is recovered based on said backup data and said archive data.

**4.** The distributed data processing system according to claim 3, wherein the backup processor (123, 143) is adapted for performing a file copy operation to store the backup data in the backup data memory.

**5.** The distributed data processing system according to one of claims 1 to 4, wherein the replication trigger generator is adapted for converting an updating SQL into a propagating SQL.

**6.** The distributed data processing system according to one of claims 1 to 5, wherein said servers comprise:

a server (14) for managing one of the clients which is of a production management system which is of the object to be controlled; and
a server (12) for managing one of the clients which is of a process control system which is of the object to be controlled.

**7.** The distributed data processing system according to claim 6, wherein each of said servers has independent settings of distributed data processing so that said database can be independently processed in inserting, updating, or deleting data.

**8.** The distributed data processing system according to one of claims 1 to 7, wherein the clients connected to any one of said servers are different from the clients connected to another one of said servers.

**9.** The distributed data processing system according to one of claims 1 to 8, wherein said database updating processor in each of said servers is adapted for updating said database based on the updating information, wherein each of said servers is adapted for generating the updating information upon an updating request from one of said clients connected to said server, and said database updating processor is adapted for transferring the updating information of said database to another one of said servers.

**10.** The distributed data processing system according to claim 9, wherein said database updating processor is adapted for determining whether the updating information is generated by said server or is transferred from the other one of said servers, and wherein said replication trigger generator is adapted to receive a replication trigger generation inhibition when the updating information is transferred from the other one of said servers.

**11.** A method of processing data in a distributed data processing system having a plurality of servers (12, 14) and a plurality of clients (20, 22, 24, 26, 30, 32) connected to the servers for performing a distributed data processing process on an object to be controlled, comprising the steps of:

updating (S3) a database (122, 142) according to the distributed data processing process performed by said clients;
generating (S4) a replication trigger based on the updating of said database by the distributed data processing process performed by said clients;
transferring updating information of said database to another one of the servers based on said replication trigger; and
updating said database based on the updating information transferred from the other server,

wherein said step of updating (S3) according to the distributed data processing process is performed while updating the database of the respective other server.

**12.** The method according to claim 11, further comprising the steps of:

if any of said servers suffers a fault, changing a connection destination of the clients connected to the server which suffers the fault to another one of the servers; and
continuing the distributed data processing process performed by the clients connected to the server under the management of the other server.

**13.** The method according to claim 12, further comprising the step of activating again said server suffering the fault to resume normal operation after completion of a restoring process, said step of activating again said server comprising the steps of:

shutting off all the clients connected to said server;

setting again information of the connection destination of the clients;
connecting the clients to said server according to the set information; and
resuming the distributed data processing process in a normal connection state.

**14.** The method according to one of claim 11 to 13, further comprising the steps of:

performing a backup process at predetermined time intervals while said database is in operation and saving backup data produced by the backup process performed;
generating and saving archive data based on the updating information of the database which is generated after the backup process performed while said database is in operation has started; and
if one of said servers suffers a fault, copying said backup data of another one of the servers, and recovering the database from said archive data of the other server.

**15.** The method according to claim 14, further comprising the step of:

copying said backup data while the clients are being continuously operated by said other server.

**16.** The method according to one of claims 11 to 15, further comprising converting an updating SQL into a propagating SQL.

**Patentansprüche**

**1.** Verteiltes Datenverarbeitungssystem umfassend eine Vielzahl von Servern (12, 14) und eine Vielzahl von Clients (20, 22, 24, 26, 30, 32), die mit den Servern verbunden sind, um einen verteilten Datenverarbeitungsprozess an einem zu steuemden Objekt durchzuführen, wobei jeder der Server umfasst:

einen Datenbankspeicher (122, 142) zum Speichern einer Datenbank, die durch den verteilten Datenverarbeitungsprozess aktualisiert wird, der durch die Clients durchgeführt wird;
einen Replikationstriggergenerator (132, 152) zum Erzeugen eines Replikationstriggers aufgrund der Aktualisierung der Datenbank durch den verteilten Datenverarbeitungsprozess, der durch die Clients durchgeführt wird;
eine Aktualisierungsinformationsübertragungseinheit (130, 150) zum Übertragen von Aktualisierungsinformation der Datenbank zu einem anderen der Server aufgrund des Replikationstriggers;
ein Datenbankaktualisierungsprozessor (128, 148) zum Aktualisieren der Datenbank aufgrund der von dem anderen Server übertragenen aktualisierten Information,

wobei jeder der Server (12, 14) angepasst ist, während einer Durchführung einer Aktualisierung der Datenbank (122, 142) des entsprechend anderen Servers aufgrund eines Clientprozesses aktualisiert zu werden.

**2.** Verteiltes Datenverarbeitungssystem nach Anspruch 1, wobei jeder der Clients umfasst:

einen Verbindungsinformationsverwalter (20b, 30b) zum Verwalten von Verbindungsinformation eines Verbindungszielservers, mit dem die Clients verbunden sind; und
einen Verbindungsinformationswechsler (20c, 30c) zum Auswechseln der Verbindungsinformation des Verbindungszielservers;

wobei die Anordnung derart ausgeführt ist, dass bei Auftreten eines Fehlers bei einem der Server, die Verbindungsinformation durch den Verbindungsinformationswechsler ausgewechselt wird, und dass der verteilte Datenverarbeitungsprozess, der durch die Clients durchgeführt wird, die mit dem Server verbunden sind, bei dem der Fehler auftritt, unter Verwaltung des anderen Servers, zu dem die Verbindungsinformation gewechselt wurde, fortgeführt wird.

**3.** Verteiltes Datenverarbeitungssystem nach Anspruch 1 oder 2, weiterhin umfassend:

einen Datensicherungsprozessor (123, 143) zum Durchführen eines Datensicherungsprozesses zu vorbestimmten Zeitintervallen, während die Datenbank in Betrieb ist;
einen Datensicherungsspeicher (124, 144) zum Speichern von Sicherungsdaten, die während des Betriebs der Datenbank durch den Datensicherungsprozess erzeugt wurden;

einen Archivdatengenerator (125, 145) zum Erzeugen von Archivdaten aufgrund der Aktualisierungsinformation der Datenbank, wobei die Aktualisierungsinformation nach dem Start des Datensicherungsprozesses während des Betriebs der Datenbank erzeugt wurde; und

einen Archivdatenspeicher (126, 146) zum Speichern der Archivdaten;

wobei die Anordnung derart ausgeführt ist, dass die Datenbank aufgrund der Sicherungsdaten und der Archivdaten wiederhergestellt wird.

4. Verteiltes Datenverarbeitungssystem nach Anspruch 3, wobei der Datensicherungsprozessor (123, 143) zum Durchführen einer Dateikopieroperation angepasst ist, um die Sicherungsdaten in dem Datensicherungsspeicher zu speichern.

5. Verteiltes Datenverarbeitungssystem nach einem der Ansprüche 1 bis 4, wobei der Replikationstriggergenerator zum Umwandeln einer Updating-SQL in eine Propagating-SQL angepasst ist.

6. Verteiltes Datenverarbeitungssystem nach einem der Ansprüche 1 bis 5, wobei die Server umfassen:

einen Server (14) zum Verwalten einer der Clients, der zu einem zu steuemden Produktionsverwaltungssystem gehört; und

einen Server (12) zum Verwalten einer der Clients, der zu einem zu steuernden Prozesssteuerungssystem, gehört.

7. Verteiltes Datenverarbeitungssystem nach Anspruch 6, wobei jeder der Server unabhängige Einstellungen der verteilten Datenverarbeitung aufweist, so dass die Datenbank eine Einfügung, eine Aktualisierung oder eine Löschung von Daten unabhängig durchführen kann.

8. Verteiltes Datenverarbeitungssystem nach einem der Ansprüche 1 bis 7, wobei sich die Clients, die mit dem einem der Server verbunden sind, von den Clients, die mit dem anderen der Server verbunden sind, unterscheiden.

9. Verteiltes Datenverarbeitungssystem nach einem der Ansprüche 1 bis 8, wobei in jedem der Server der Datenbankaktualisierungsprozessor zum Aktualisieren der Datenbank aufgrund der Aktualisierungsinformation angepasst ist, wobei jeder der Server zum Erzeugen der Aktualisierungsdaten bei einer Aktualisierungsaufforderung von einem der Clients angepasst ist, der mit dem Server verbunden ist, und wobei der Datenbankaktualisierungsprozessor zum Übertragen der Aktualisierungsinformation von der Datenbank zu einem anderen der Server angepasst ist.

10. Verteiltes Datenverarbeitungssystem nach Anspruch 9, wobei der Datenbankaktualisierungsprozessor angepasst ist zum Bestimmen, ob die Aktualisierungsinformation durch den Server erzeugt wurde, oder ob die Aktualisierungsinformation von einem anderen der Server übertragen wurde, und wobei der Replikationstriggergenerator angepasst ist, eine Replikationstriggererzeugungssperrung zu empfangen, wenn die Aktualisierungsinformation von dem anderen der Server übertragen wurde.

11. Datenverarbeitungsverfahren in einem verteilten Datenverarbeitungssystem mit einer Vielzahl von Servern (12, 14) und einer Vielzahl von Clients (20, 22, 24, 26, 30, 32), die mit den Servern zum Durchführen eines verteilten Datenverarbeitungsprozesses an einem zu steuernden Objekt verbunden sind, wobei das Verfahren folgende Schritte umfasst:

Aktualisieren (S3) einer Datenbank (122, 142) entsprechend des verteilten Datenverarbeitungsprozesses, der durch die Clients durchgeführten wird;
Erzeugen (S4) eines Replikationstriggers aufgrund der Aktualisierung der Datenbank durch den verteilten Datenverarbeitungsprozess, der durch die Clients durchgeführt wird;
Übertragen von Aktualisierungsinformation der Datenbank zu einem anderen der Server aufgrund des Replikationstriggers; und
Aktualisieren der Datenbank aufgrund der Aktualisierungsinformation, die von dem anderen Server übertragen wurde,

wobei der Schritt des Aktualisierens (S3) entsprechend des verteilten Datenverarbeitungsprozesses während der Aktualisierung der Datenbank des entsprechend anderen Servers durchgeführt wird.

**12.** Verfahren nach Anspruch 11, weiterhin die Schritte umfassend:

Wechseln eines Verbindungsziels der Clients, die mit dem Server verbunden sind, bei dem der Fehler auftritt, zu einem anderen der Server, wenn bei einem der Server ein Fehler auftritt; und

Fortführen des verteilten Datenverarbeitungsprozesses, der durch die Clients durchgeführt wird, die mit dem Server unter Verwaltung des anderen Servers verbunden sind.

**13.** Verfahren nach Anspruch 12, weiterhin den Schritt umfassend des Wiederaktivierens des Servers, bei dem der Fehler auftritt, um mit einem normalen Arbeitslauf nach der Fertigstellung eines Wiederherstellungsprozesses fortzufahren, wobei der Schritt des Wiederaktivierens des Servers folgende Schritte umfasst:

Abschotten aller Clients, die mit dem Server verbunden sind;
Wiederfestsetzen von Information des Verbindungsziels der Clients;
Verbinden der Clients mit dem Server entsprechend der festgesetzten Information; und
Fortführen des verteilten Datenverarbeitungsprozesses in einem normalen Verbindungsstatus.

**14.** Verfahren nach einem der Ansprüche 11 bis 13, weiterhin die Schritte umfassend:

Durchführen eines Datensicherungsprozesses zu vorbestimmten Zeitintervallen, während die Datenbank in Betrieb ist, und Speichern von Sicherungsdaten, die durch den durchgeführten Datensicherungsprozess erzeugt wurden;
Erzeugen und Sichern von Archivdaten aufgrund der Aktualisierungsinformation der Datenbank, wobei die Aktualisierungsinformation nach dem Start des Datensicherungsprozesses während des Betriebs der Datenbank erzeugt wurde; und
Kopieren der Sicherungsdaten von einem der anderen Server, wenn bei einem der Server ein Fehler auftritt, und Wiederherstellen der Datenbank von den Sicherungsdaten des anderen Servers.

**15.** Verfahren nach Anspruch 14, weiterhin die Schritte umfassend:

Kopieren der Sicherungsdaten, während die Clients ununterbrochen durch den anderen Server betrieben werden.

**16.** Verfahren nach einem der Ansprüche 11 bis 15, weiterhin einen Schritt umfassend des Umwandeins einer Updating-SQL in eine Propagating-SQL.

**Revendications**

**1.** Système de traitement de données réparti comprenant une pluralité de serveurs (12, 14) et une pluralité de clients (20, 22, 24, 26, 30, 32) reliés aux serveurs pour exécuter un processus de traitement de données réparti sur un objet à commander,
chacun desdits serveurs comprenant :

une mémoire de base de données (122, 142) destinée à mémoriser une base de données qui est mise à jour par le processus de traitement de données réparti exécuté par lesdits clients,
un générateur d'élément de déclenchement de duplication (132, 152) destiné à générer un élément de déclenchement de duplication sur la base de la mise à jour de ladite base de données par le processus de traitement de données réparti exécuté par lesdits clients,
une unité de transfert d'informations de mise à jour (130, 150) destinée à transférer des informations de mise à jour de ladite base de données vers un autre des serveurs sur la base dudit élément de déclenchement de duplication,
un processeur de mise à jour de base de données (128, 148) destiné à mettre à jour ladite base de données en se fondant sur les informations de mise à jour transférées depuis l'autre serveur,

dans lequel chacun des serveurs (12, 14) est conçu pour être mis à jour sur la base d'un processus d'un client pendant que la mise à jour de la base de données (122, 142) de l'autre serveur respectif est exécutée.

**2.** Système de traitement de données réparti selon la revendication 1, dans lequel chacun desdits clients comprend :

un gestionnaire d'informations de connexion (20b, 30b) destiné à gérer les informations de connexion d'un serveur de destination de connexion auquel les clients sont connectés, et

un module de changement d'informations de connexion (20c, 30c) destiné à changer les informations de connexion du serveur de destination de connexion,

l'agencement étant tel que si l'un quelconque desdits serveurs subit une défaillance, lesdites informations de connexion sont changées par ledit module de changement d'informations de connexion, et le processus de traitement de données réparti exécuté par les clients connectés au serveur qui subit la défaillance est poursuivi sous la gestion d'un autre des serveurs pour lequel lesdites informations de connexion sont changées.

3. Système de traitement de données réparti selon la revendication 1 ou 2, comprenant en outre :

un processeur de sauvegarde (123, 143) destiné à exécuter un processus de sauvegarde à des intervalles de temps prédéterminés pendant que ladite base de données est en fonctionnement,

une mémoire de données de sauvegarde (124, 144) destinée à mémoriser des données de sauvegarde produites par le processus de sauvegarde exécuté pendant que ladite base de données est en fonctionnement,

un générateur de données d'archives (125, 145) destiné à générer des données d'archives sur la base des informations de mise à jour de la base de données qui sont générées après que le processus de sauvegarde exécuté pendant que ladite base de données est en fonctionnement, a débuté, et

une mémoire de données d'archives (126, 146) destinée à mémoriser les données d'archives,

l'agencement étant tel que ladite base de données effectue une reprise sur lesdites données de sauvegarde et lesdites données d'archives.

4. Système de traitement de données réparti selon la revendication 3, dans lequel le processeur de sauvegarde (123, 143) est conçu pour exécuter une opération de copie de fichier pour mémoriser les données de sauvegarde dans la mémoire de données de sauvegarde.

5. Système de traitement de données réparti selon l'une des revendications 1 à 4, dans lequel le générateur d'élément de déclenchement de duplication est conçu pour convertir une instruction SQL de mise à jour en une instruction SQL de propagation.

6. Système de traitement de données réparti selon l'une des revendications 1 à 5, dans lequel lesdits serveurs comprennent :

un serveur (14) destiné à gérer l'un des clients qui fait partie d'un système de gestion de production qui constitue l'objet à commander, et

un serveur (12) destiné à gérer l'un des clients qui fait partie d'un système de commande de processus qui constitue l'objet à commander.

7. Système de traitement de données réparti selon la revendication 6, dans lequel chacun desdits serveurs présente des réglages indépendants du traitement de données réparti de sorte que ladite base de données peut être traitée indépendamment pour insérer, mettre à jour ou supprimer des données.

8. Système de traitement de données réparti selon l'une des revendications 1 à 7, dans lequel les clients connectés à l'un quelconque desdits serveurs sont différents des clients connectés à un autre desdits serveurs.

9. Système de traitement de données réparti selon l'une des revendications 1 à 8, dans lequel ledit processeur de mise à jour de base de données dans chacun desdits serveurs est conçu pour mettre à jour ladite base de données sur la base des informations de mise à jour, où chacun desdits serveurs est conçu pour générer les informations de mise à jour lors d'une demande de mise à jour depuis l'un desdits clients connectés audit serveur, et ledit processeur de mise à jour de base de données est conçu pour transférer les informations de mise à jour de ladite base de données vers un autre desdits serveurs.

10. Système de traitement de données réparti selon la revendication 9, dans lequel ledit processeur de mise à jour de base de données est conçu pour déterminer si les informations de mise à jour sont générées par ledit serveur ou sont transférées depuis l'autre desdits serveurs, et dans lequel ledit générateur d'élément de déclenchement de duplication est conçu pour recevoir une inhibition de génération d'élément de déclenchement de duplication lorsque les informations de mise à jour sont transférées depuis l'autre desdits serveurs.

**11.** Procédé de traitement de données dans un système de traitement de données réparti comportant une pluralité de serveurs (12, 14) et une pluralité de clients (20, 22, 24, 26, 30, 32) connectés aux serveurs afin d'exécuter un processus de traitement de données réparti sur un objet à commander, comprenant les étapes consistant à :

mettre à jour (S3) une base de données (122, 142)conformément au processus de traitement de données réparti exécuté par lesdits clients,
générer (S4) un élément de déclenchement de duplication sur la base de la mise à jour de ladite base de données par le processus de traitement de données réparti exécuté par lesdits clients,
transférer des informations de mise à jour de ladite base de données vers un autre des serveurs sur la base dudit élément de déclenchement de duplication, et
mettre à jour ladite base de données sur la base des informations de mise à jour transférées depuis l'autre serveur,

dans lequel ladite étape de mise à jour (S3) conforme au processus de traitement de données réparti est exécutée pendant une mise à jour de la base de données de l'autre serveur respectif.

**12.** Procédé selon la revendication 11, comprenant en outre les étapes consistant à :

si l'un quelconque desdits serveurs subit une défaillance, changer une destination de connexion des clients connectés au serveur qui subit la défaillance vers un autre des serveurs, et
poursuivre le processus de traitement de données réparti exécuté par les clients connectés au serveur sous la gestion de l'autre serveur.

**13.** Procédé selon la revendication 12, comprenant en outre l'étape consistant à activer à nouveau ledit serveur subissant la défaillance pour reprendre un fonctionnement normal après l'achèvement d'un processus de reprise, ladite étape consistant à activer à nouveau ledit serveur comprenant les étapes consistant à :

arrêter tous les clients connectés audit serveur,
initialiser à nouveau des informations de la destination de connexion des clients,
connecter les clients audit serveur conformément aux informations initialisées, et
reprendre le processus de traitement de données réparti dans un état de connexion normal.

**14.** Procédé selon l'une des revendications 11 à 13, comprenant en outre les étapes consistant à :

exécuter un processus de sauvegarde à des intervalles de temps prédéterminés pendant que ladite base de données est en fonctionnement et sauvegarder des données de sauvegarde produites par le processus de sauvegarde exécuté,
générer mémoriser des données d'archives sur la base des informations de mise à jour de la base de données qui sont générées après que le processus de sauvegarde exécuté pendant que ladite base de données est en fonctionnement a débuté, et
si l'un desdits serveurs subit une défaillance, copier lesdites données de sauvegarde d'un autre des serveurs, et effectuer une reprise de la base de données à partir desdites données d'archives de l'autre serveur.

**15.** Procédé selon la revendication 14, comprenant en outre l'étape consistant à :

copier lesdites données de sauvegarde pendant que les clients sont actionnés en permanence par ledit autre serveur.

**16.** Procédé selon l'une des revendications 11 à 15, comprenant en outre la conversion d'une instruction SQL de mise à jour en une instruction SQL de propagation.

# FIG. 1

12 SERVER

14 SERVER

124
BACKUP
DATA
MEMORY

128
BACKUP
PROCESSOR

123 122

DATABASE
UPDATING
PROCESSOR

148
DATABASE
UPDATING
PROCESSOR

144
BACKUP
PROCESSOR

142 143

BACKUP
DATA
MEMORY

125
ARCHIVE
DATA
GENERATOR

130
UPDATING
INFORMATION
TRANSFER
UNIT

150
UPDATING
INFORMATION
TRANSFER
UNIT

145
ARCHIVE
DATA
GENERATOR

126
ARCHIVE
DATA
MEMORY

DATABASE
MEMORY

132
REPLICATION
TRIGGER
GENERATOR

152
REPLICATION
TRIGGER
GENERATOR

DATABASE
MEMORY

146
ARCHIVE
DATA
MEMORY

16

| 20 | 22 | 24 | 26 | 30 | 32 |
|---|---|---|---|---|---|
| CLIENT | CLIENT | CLIENT | CLIENT | CLIENT | CLIENT |
| 220 | 222 | 224 | 226 | 230 | 232 |
| USER APPLICATION | USER APPLICATION | USER APPLICATION | USER APPLICATION | USER APPLICATION | USER APPLICATION |

EP 1 139 235 B1

## FIG. 2

EP 1 139 235 B1

# FIG. 3

**10 DISTRIBUTED DATA PROCESSING SYSTEM**

FIG. 4

# FIG. 5

START

EFFECT POLLING    S21

S22
SUPPLIED
WITH PROPAGATING    NO
SQL ?

YES

TRANSFER PROPAGATING    S23
SQL

S24
RECEIVED ?    NO

YES

DELETE PROPAGATING    S25
SQL

END

# FIG. 6

EP 1 139 235 B1